# EUROPEAN PATENT SPECIFICATION

(11) **EP 3 808 578 B1**
(45) Date of publication and mention of the grant of the patent: **20.11.2024**
(21) Application number: 20201472.6
(22) Date of filing: 13.10.2020
(51) Int. Cl.: B60D 5/00, B61D 17/22, B62D 47/02

(54) **PROTECTIVE SYSTEM AND METHOD FOR ARTICULATED VEHICLES AND CORRESPONDING ARTICULATED VEHICLE**
SCHUTZSYSTEM UND VERFAHREN FÜR GELENKFAHRZEUGE UND ZUGEHÖRIGES GELENKFAHRZEUG
SYSTÈME DE PROTECTION ET PROCÉDÉ POUR VÉHICULES ARTICULÉS ET VÉHICULE ARTICULÉ CORRESPONDANT

(30) Priority: 18.10.2019 IT 201900019316
(43) Date of publication of application: 21.04.2021
(73) Proprietor: P.E.I. Protezioni Elaborazioni Industriali S.r.l., 40012 Calderara di Reno (Bologna) (IT)
(72) Inventor: BENEDETTI, Michele, 40132 Bologna (IT); GUIDI, Luca, 40131 BOLOGNA (IT)
(74) Representative: Milli, Simone

(56) References cited:
- EP-A1- 2 149 463
- EP-A1- 3 184 330
- ES-T3- 2 364 960
- KR-A- 20100 042 300

## Description

This invention relates to a protective system for articulated vehicles, in particular a protective system for carriages of articulated vehicles (for example, buses). The document EP 3 184 330 A1 discloses such a protective system.

In the sector in question, several protective systems for articulated vehicles are known, in particular systems designed to allow protecting the zone between one carriage and another, where there is normally an articulation system connecting one carriage to the other and known in technical jargon as "fifth wheel".

It should be noted that the zone between one carriage and another in these articulated vehicles comprises an external bellows which defines the side walls and roof of the region connecting the carriages to each other. The protective systems comprise numerous pieces which act in conjunction to protect and hold in position ends of the bellows with consequent complexity in the installation and production costs of the parts. Moreover, the prior art protective systems are particularly linked to construction tolerances.

Inside the articulated vehicle there is normally a further protective system, designed to isolate the inside wall of the external bellows, that is to say, designed to isolate further mechanical components present therein and close the gaps which are created between the rotary platform and the external bellows.

An aim of the invention, therefore, is to provide a protective system for carriages of articulated vehicles, in particular articulated buses, which is particularly simple, practical and inexpensive.

A further aim of the invention is to provide a protective system for carriages of articulated vehicles which is particularly robust and able to be applied to articulated vehicles very easily.

The technical features of the invention, with reference to the above aims, are clearly described in the annexed claims and its advantages are more apparent from the detailed description which follows, with reference to the accompanying drawings which illustrate an example, non-limiting embodiment of the invention and in which:

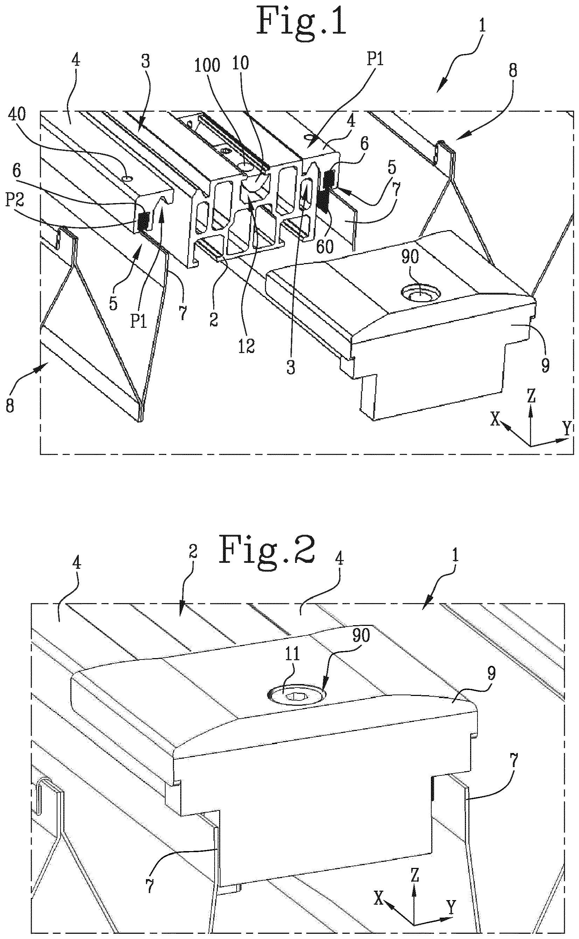

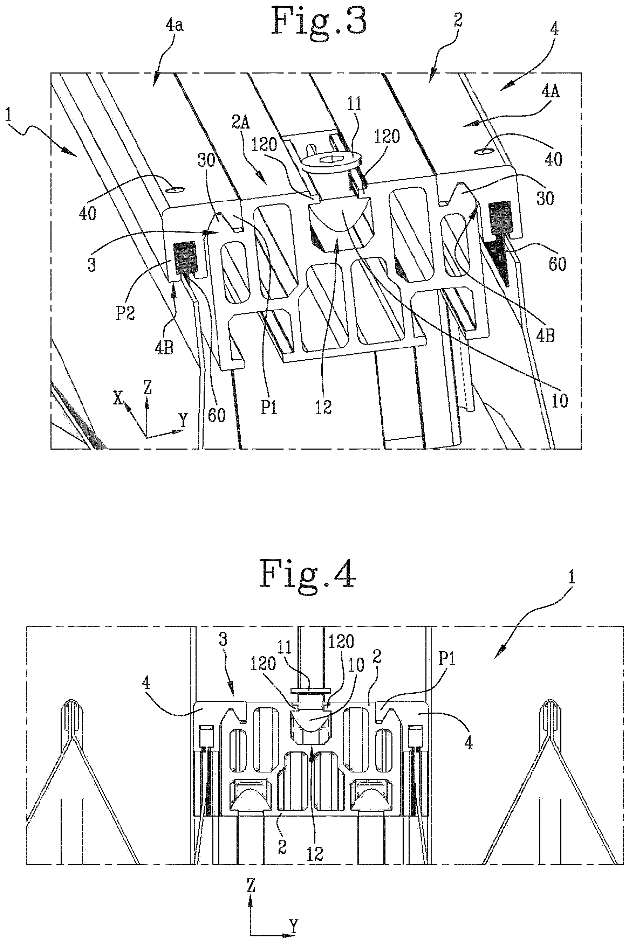

- Figures 1 to 3 are perspective views of the protective system according to the invention;
- Figure 4 is a cross-section of the protective system according to the invention;

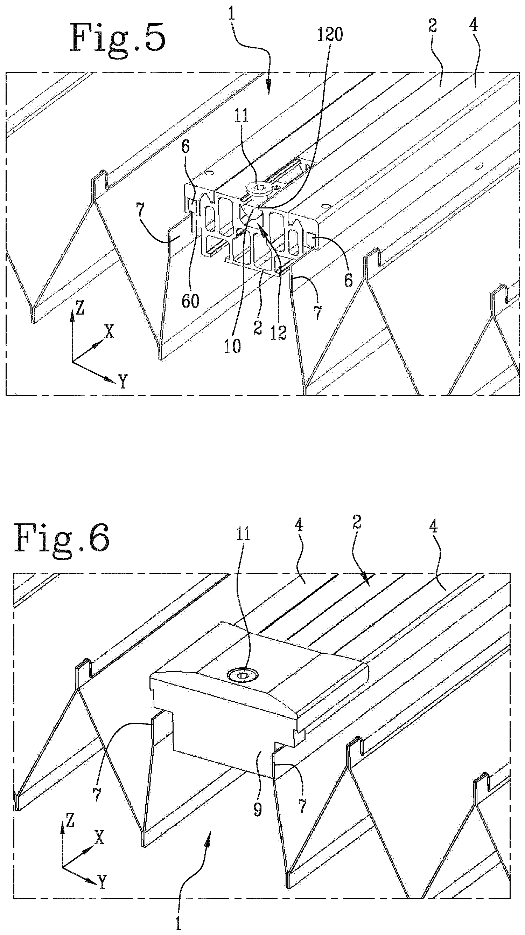

- Figures 5 and 6 are perspective views of the protective system according to the invention; and
- Figure 7 is a perspective view of the protective system according to the invention, applied to an articulated bus.

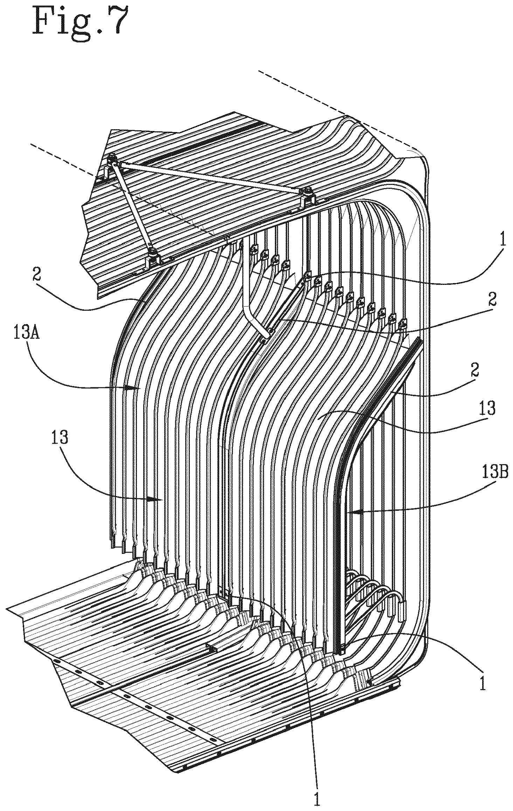

With reference to the accompanying drawings, the numeral 1 denotes a protective system for vehicles provided with a plurality of carriages, preferably (but not exclusively) of the articulated bus type. The system 1 is described with reference to a system of Cartesian axes X, Y, Z, wherein, in the drawings, the axis X represents a first longitudinal direction, the axis Y represents a second sideways direction and the axis Z represents a third direction perpendicular to the direction of extension of the system 1 which may not correspond to the vertical axis, as illustrated for example in Figure 7.

According to the invention, the system 1 comprises:
- a frame 2 provided with a first receiving seat 3 extending along the first direction X;
- a coupling element 4 comprising a first portion P1 shaped for coupling to the receiving seat 3 and a second portion P2 in which a housing seat 5 is made;
   - a tubular member 6 configured to be inserted into the housing cavity 5 in such a way as to be coupled to the coupling member 4;
   - a laminar member 7 defining a bellows 8 and stably connected in use, directly or indirectly, to the tubular member 6;
   - a locking device which can be coupled to the frame 2 and configured to hold in position the coupling element 4 above the frame 2.

At least one between the first portion P1 of the coupling element 4 and the first receiving seat 3 is at least partly tapered so that said first portion P1 is configured to be automatically centred (due to its shape) during the coupling with the first receiving seat 3. Automatic centring means that the coupling element 4 can be inserted in position in the first seat 3 in a predetermined position and in the absence of a guide inside the first seat 3. Moreover, the element 4 is able to fix inside the first seat 3 in the absence of further components configured to carry and hold in position the coupling element 4.

In other words, the partly tapered shape of the first portion P1 of the element 4 and/or of the first seat 3 can operate in conjunction during the insertion of the portion P1 in the first seat 3, so as to facilitate said insertion. According to one aspect, the portion P1 may have a truncated cone shape. The first seat 3 may have a groove shaped to match the truncated cone shape of the portion P1.

According to an aspect, the first portion P1 and/or the seat 3 are rigid at the taper, for example they are not elastically deformable.

Advantageously, the partly tapered shape of the first portion P1 and/or of the first receiving seat 3 allows the automatic centring. In effect, a tapered side allows the coupling element 4 to be guided in position and be fixed (for example, locked) inside the first seat 3.

According to an aspect of the invention, the frame 2 is a tubular member extending along the first direction X. The frame 2 also extends along the second direction Y and comprises two lateral ends. At least at one of the ends, the frame 2 comprises the first receiving seat 3, which may extend longitudinally along the entire length of the frame 2. The first seat 3 may be at least partly in negative pressure relative to a first surface 2A of the frame 2. In a central zone, the frame 2 comprises a second receiving seat 12. The second receiving seat 12 may comprise tabs 120 projecting towards the inside of the second receiving seat 12.

The first receiving seat 3 may have a conical shape. For example, the first receiving seat 3 may comprise a protuberance 30 extending in the third direction Z, away from the frame 2 and/or perpendicularly to the first surface 2A of the frame 2. In this way, the first receiving seat 3 has a raised portion (towards the lateral end of the frame 2) and a recessed portion (towards the central zone of the frame 2).

According to one or more embodiments, the first portion P1 of the coupling member 4 may have a conical shape. For example, the first portion P1 may comprise a cavity, for example conical, so that the protuberance of the first receiving seat 3 can be inserted inside the cavity of the first portion P1 when the coupling element 4 is coupled to the frame 2. The first portion P1 may have a shape substantially complementary to the shape of the first receiving seat 3. Alternatively, the first portion P1 may comprise, at one end, a hemispherical shape, configured to be inserted inside the first receiving seat 3 at least partly tapered.

The coupling element 4 may comprise a first surface 4A and a second surface 4B opposite the first surface 4A, with the first portion P1 and the second portion P2 located on the second lower surface. For example, the first portion P1 may be located at a first lateral end of the second surface 4B and the second portion P2 may be at a second lateral end of the second surface 4B. The coupling element 4 may comprise one or more recesses 40 at the first surface 4A.

The coupling element 4 may extend longitudinally along the first direction X substantially for the entire length of the receiving seat 3. Preferably, the coupling element 4 is preferably made of a metallic or plastic material. According to another aspect, the coupling element 4 may be made by calendering.

According to another aspect of the invention, the tubular member 6 has a circular cross section. Alternatively, the tubular member 6 has a square or rectangular cross section. Alternatively, the tubular member 6 is formed from a flexible member which is bent (to define the tubular member) and comprises a zip hinge portion, called "zip" for short.

According to another aspect, the tubular member 6 is configured to be inserted in the housing cavity 5 in such a way that it can slide in the housing cavity 5 (in effect, it is inserted by sliding). If the tubular member 6 has a circular cross-section, it is preferably inserted inside the seat 5 with the possibility of rotation. Also preferably, the laminar member 7 is, in use, fixedly connected directly or indirectly to the tubular member 6.

According to another aspect, the system 1 comprises a connecting member 60 which is coupled to the tubular member 6 (preferably wound on itself) and to which the laminar member 7 is connected, and in use, when said tubular member 6 is inserted into the housing cavity 5, the connecting member 60 is partly protruding from the housing cavity 5. It should be noted that the connecting member 60 may be a quick-release coupling, preferably of the hinge type. It should be noted that the laminar member 7 is connected to the portion of the coupling member 60 protruding from the housing cavity 5.

Preferably, the tubular member 6 is preferably made of a metallic or plastic material. Preferably, the laminar member 7 is made of a plastic material or of fabric. Also, the connecting member 60 is preferably made of a plastic material or of fabric (preferably different from the type of material used for the laminar member 7). Preferably, the laminar member 7 is sewn to the connecting member 60.

According to one or more embodiments, the locking device 9, 10, 11 may comprise a covering element 9, a base element 10 and a fixing element 11.

The covering element 9 is configured to protect and cover the frame 2 and the coupling element (or elements) 4, when the latter is coupled to the frame 2. The covering element 9 may be fixed to at least one longitudinal end of the frame 2, different from the lateral ends. The width of the covering element 9 may be equal to the width of the frame 2 and of one or more coupling elements 4. In a central portion, the covering element 9 may comprise a through hole 90. When the covering element 9 is in position at the frame 2, the through hole 90 may be located at the second receiving seat 12 of the frame 2. The covering element 9 may be fixed on the frame 2 in front of the frame 2, that is to say, it is possible to rest the covering element with a movement in the third direction Z. Alternatively, the covering element 9 may be fixed on the frame 2 laterally relative to the frame 2, that is to say, it is possible to rest the covering element with a movement along the first longitudinal direction X.

The base element 10 is shaped to be inserted inside the second receiving seat 12. The base element 10 may comprise a first surface which is at least partly curved and a second surface, opposite the first surface, whose width is equal to the width of the second receiving seat 12. As illustrated in the drawings, the first surface may have a curved shape (preferably parabolic). The second surface may comprise a cavity 100 and/or may be substantially flat.

The insertion of the base element 10 inside the second receiving seat 12 may occur frontally and may comprise one or more of the following steps:
- positioning the base element 10 in an insertion position by inclining the base element 10 relative to the second receiving seat 12 about an axis of rotation parallel to the first longitudinal direction X,
- inserting a first end of the second surface inside the second seat, with the first surface facing towards the frame 2,
- resting the first end of the second surface under a tab 120 projecting against a side wall of the second seat 12,
- rotating, about the axis of rotation, the base element 10 in the opposite direction to the first inclination to insert the second end of the base element 10 inside the second receiving seat 12.

According to one aspect, inserting the base element 10 in the second seat 12 may comprise the step of applying pressure on the base element 10, at a second end of the second surface, until the second end is inserted inside the second receiving seat 12.

Alternatively, the insertion of the base element 10 inside the second seat 12 may occur laterally and may comprise the step of inserting translating the base element 10 along the first longitudinal direction X until it is inserted, for example completely, in the second seat 12.

According to one or more embodiments, the covering element 9 is configured for coupling with the base element 10 inserted inside the second seat 12, by means of the fixing element 11. The fixing element 11 may comprise a threaded element designed to be coupled by screwing to the base element 10 respectively passing through the through hole 90 and the cavity 100 (determining the locking of the covering element 9 to the base element 10). The base element 10 may comprise a threaded inner wall. When the locking device is in position, the lateral ends of the base element 10 may be in contact with the tabs 120. When the locking device is in position, the covering element 9 may be configured to prevent an escape of the one or more coupling elements 4 from the first receiving seat 3. In other words, the covering element 9 may be configured to removably constrain the coupling element 4 to the receiving seat 3. According to one or more embodiments, the covering element 9 may comprise at least one protuberance (not illustrated in the drawings), at one or both of the lateral ends, for example a cylindrical pin. As already described, the coupling element 4 may comprise at least one recess 40 at the first upper surface. In this way, when the covering element 9 is positioned at (for example, in contact with) the frame 2 and the coupling element 4, the at least one protuberance of the covering element 9 is inserted inside the at least one recess 40 of the coupling element 4. Advantageously, the presence of the at least one protuberance and the at least one recess 40 allows the covering element 9 of the locking device to be automatically centred relative to the frame 2.

Also defined according to the invention is an articulated vehicle comprising at least a first and a second carriage (or passenger carrying unit) joined to each other by an articulated joint ("fifth wheel") at a connecting zone, and further comprising:
- a bellows 13 for protecting and closing the connecting zone and having an inside wall 13A and an outside wall 13B facing the outside of the vehicle (the terms "inside" and "outside" being used to denote the wall facing towards the zone occupied by the users of the vehicle and the wall facing towards the exterior of the vehicle, respectively);
- a protective system 1 as described above, wherein said frame 2 is positioned at a zone of the vehicle delimited by the inside wall 13A of the protective bellows 13.

It should be noted that the protective system according to the invention is substantially applied for the protection of the inside wall 13A of the bellows 13, that is, of mechanical components of the articulated vehicle.

It should also be noted that, relative to the main direction of longitudinal extension of the articulated vehicle, the receiving cavity 3 is open transversely, towards the inside of the vehicle.

It should be noted that, to all intents and purposes, the bellows 8 serves a protective function and also hides from view the components mounted behind (that is, those facing towards the inside wall 13A of the bellows 13). Advantageously, the system 1 is particularly simple and inexpensive. In particular, it is very quick and easy to install (assemble/disassemble). Also, according to an aspect, the coupling element 4 is made by calendering: that means the coupling member is, advantageously, particularly economical.

One or more embodiments also refer to a method for protecting a connecting zone of two articulated carriages of a vehicle (for example, a bus). The method comprises the steps of:
- preparing, at the connecting zone of two carriages, a frame 2 provided with a receiving seat 3 extending along a longitudinal direction, for example the first direction X;
- preparing a coupling element 4 comprising a first portion P1 shaped for coupling to the receiving seat 3 and a second portion P2 in which a housing seat 5 is made;
- preparing a tubular element 6,
- inserting said tubular element 6 inside the housing seat 5, so as to couple said tubular element 6 with the coupling element 4,
- preparing a laminar member 7 defining a bellows 8;
- connecting said laminar member 7 to the tubular member 6 directly or indirectly,
- coupling said coupling element 4 to said frame 2, wherein at least one between the first portion P1 of the coupling element 4 and the first receiving seat 3 is at least partly tapered so that said first portion P1 is configured to be automatically centred during the coupling with the first receiving seat 3,
- preparing a locking device 9, 10, 11 configured to hold in position said coupling element 4 above the frame 2, and
- coupling said locking device 9, 10, 11 to said frame 2.
- The method can also comprise the steps of:
- providing a locking device 9, 10, 11 comprising a covering element 9, a base element 10 and a fixing element 11,
- inserting said base element 10 inside a second seat 12 for receiving the frame 2, and
- coupling the covering element 9 to the base element 10 inserted by means of said fixing element 11, preferably a screw.

The method may comprise:
- providing a base element 10 with a surface at least partly curved having a first end and a second end,
- the step of inserting said base element 10 inside a second seat 12 for receiving the frame 2 comprises a step of positioning said base element 10 in an inserting position and inserting the first end of the base element 10 inside the second seat 12 and a subsequent step of rotating, about at least one axis of rotation, said base element (10) for inserting the second end of the base element 10 inside the second receiving seat 12.

The method may also comprise a step of fixing said covering element 9 to the front of the frame 2.

## Claims

1. A protective system (1) for an articulated vehicle provided with a plurality of carriages connected by an articulated joint, comprising:
- a frame (2) provided with a first receiving seat (3) extending along a longitudinal direction (X);
- a coupling element (4) comprising a first portion (P1) shaped for coupling to the receiving seat (3) and a second portion (P2) in which a housing seat (5) is made;
- a tubular member (6) configured to be inserted into the housing cavity (5) in such a way as to be coupled to the coupling element (4);
- a laminar member (7) defining a bellows (8) and stably connected in use, directly or indirectly, to the tubular member (6);
- a locking device (9, 10, 11) which can be coupled to said frame (2) and configured to hold in position said coupling element (4) at the frame (2);
wherein at least one between the first portion (P1) of the coupling element (4) and said first receiving seat (3) is at least partly tapered so that said first portion (P1) is configured to be automatically centred during the coupling with the first receiving seat (3) and **characterized in that** the first portion (P1) has a truncated cone shape and the first seat (3) has a groove shaped to match the truncated cone shape of the first portion (P1),
wherein said first receiving seat (3) comprises a protuberance (30) which extends away from the frame (2) and said first portion (P1) of the coupling element (4) comprises a cavity, so that said protuberance of the first receiving seat (3) is inserted inside the cavity of the first portion (P1).

2. The system according to claim 1, wherein said locking device (9, 10, 11) comprises a covering element (9), a base element (10) and a fixing element (11), such that said base element (10) is shaped for inserting inside a second seat (12) for receiving the frame (2) and said covering element (9) is configured for coupling, by means of said fixing element (11), to the base element (10).

3. The system according to claim 2, wherein said base element (10) has a first surface which is at least partly curved.

4. The system according to claim 2 or 3, wherein said covering element (9) comprises at least one protuberance and wherein said coupling element (4) comprises at least one recess (40) at a surface opposite a surface comprising the first portion (P1), such that, when the covering element (9) is positioned at the frame (2), said at least one protuberance of the covering element (9) is inserted inside said at least one recess of the coupling element (4).

5. The system according to any one of claims 2 to 4, wherein said covering element (9) is fixable to the frame (2) at the front.

6. An articulated vehicle comprising at least a first and a second carriage joined to each other by an articulated joint at a connecting zone, and further comprising:
- a protective bellows (13) for protecting the connecting zone and having an inside wall (13A) and wall (13B) facing the outside of the vehicle;
- a protective system (1) according to the preceding claims, wherein said frame (2) is positioned at an internal zone delimited by the inner wall (13A) of the protective bellows (13).

7. A method for protecting a connecting zone joining two carriages of an articulated vehicle, comprising the following steps:
- preparing, at the connecting zone joining two carriages, a frame (2) provided with a receiving seat (3) extending along a longitudinal direction (X);
- preparing a coupling element (4) comprising a first portion (P1) shaped for coupling to the receiving seat (3) and a second portion (P2) in which a housing seat (5) is made;
- preparing a tubular element (6),
- inserting said tubular element (6) inside the housing seat (5), so as to couple said tubular element (6) with the coupling element (4),
- preparing a laminar member (7) defining a bellows (8);
- connecting said laminar member (7) to the tubular member (6) directly or indirectly,
- coupling said coupling element (4) to said frame (2), wherein at least one between the first portion (P1) of the coupling element (4) and said first receiving seat (3) is at least partly tapered so that said first portion (P1) is configured to be automatically centred during the coupling with the first receiving seat (3), **characterized in that** the first portion
(P1) has a truncated cone shape and the first seat (3) has a groove shaped to match the truncated cone shape of the first portion (P1) and wherein said first receiving seat (3) comprises a protuberance (30) which extends away from the frame (2) and said first portion (P1) of the coupling element (4) comprises a cavity, so that said protuberance of the first receiving seat (3) is inserted inside the cavity of the first portion (P1),
- preparing a locking device (9, 10, 11) configured to hold in position said coupling element (4) above the frame (2), and
- coupling said locking device (9, 10, 11) to said frame (2).

8. The method according to the preceding claim, wherein said locking device (9, 10, 11) comprises a covering element (9), a base element (10) and a fixing element (11) and wherein the step of coupling said locking device (9, 10, 11) to said frame (2) comprises the following steps:
- inserting said base element (10) inside a second seat (12) for receiving the frame (2), and
- coupling the covering element (9) to the base element (10) inserted by means of said fixing element (11).

9. The method according to claim 8, wherein:
- said base element (10) has an at least partly curved surface having a first end and a second end,
- the step of inserting said base element (10) inside a second seat (12) for receiving the frame (2) comprises a step of positioning said base element (10) in an inserting position and inserting the first end of the base element (10) inside the second seat (12) and a subsequent step of rotating, about at least one axis of rotation, said base element (10) for inserting the second end of the base element (10) inside the second receiving seat (12).

10. The method according to any one of claims 7 to 9, wherein the step of coupling said covering element (9) to the base element (10) inserted by means of said fixing element (11) comprises fixing said covering element (9) to the front of the frame (2).

## Patentansprüche

1. Schutzsystem (1) für ein Gelenkfahrzeug, ausgestattet mit einer Vielzahl von Wagen, die durch eine Gelenkkupplung verbunden sind, umfassend:
- einen Rahmen (2), versehen mit einem ersten Aufnahmesitz (3), der sich entlang einer Längsrichtung (X) erstreckt;
- ein Kupplungselement (4), umfassend einen ersten Abschnitt (P1), der ausgeformt ist, um mit dem Aufnahmesitz (3) gekuppelt zu werden, und einen zweiten Abschnitt (P2), in dem ein Gehäusesitz (5) ausgebildet ist;
- ein Rohrelement (6), das ausgelegt ist, um in den Gehäusehohlraum (5) eingefügt zu werden, sodass es mit dem Kupplungselement (4) gekuppelt wird;
- ein Laminarelement (7), definierend einen Balg (8), und in Verwendung stabil direkt oder indirekt mit dem Rohrelement (6) verbunden;
- eine Verriegelungsvorrichtung (9, 10, 11), die mit dem Rahmen (2) gekuppelt werden kann und ausgelegt ist, um das Kupplungselement (4) am Rahmen (2) in Position zu halten,
wobei mindestens der erste Abschnitt (P1) des Kupplungselements (4) und/oder der erste Aufnahmesitz (3) mindestens teilweise verjüngt ist/sind, sodass der erste Abschnitt (P1) ausgelegt ist, um während des Kuppelns mit dem ersten Aufnahmesitz (3) automatisch zentriert zu werden, und **dadurch gekennzeichnet, dass** der erste Abschnitt (P1) eine Kegelstumpfform aufweist und der erste Sitz (3) eine Rille aufweist, die passend zur Kegelstumpfform des ersten Abschnitts (P1) ausgeformt ist,
wobei der erste Aufnahmesitz (3) eine Ausstülpung (30) aufweist, die sich wegführend vom Rahmen (2) erstreckt und der erste Abschnitt (P1) des Kupplungselements (4) einen Hohlraum umfasst, sodass die Ausstülpung des ersten Aufnahmesitzes (3) in den Hohlraum des ersten Abschnitts (P1) eingefügt wird.

2. System nach Anspruch 1, wobei die Verriegelungsvorrichtung (9, 10, 11) ein Abdeckelement (9), ein Basiselement (10) und ein Fixierelement (11) umfasst, sodass das Basiselement (10) zum Einfügen in einen zweiten Sitz (12) zum Aufnehmen des Rahmens (2) ausgeformt ist und das Abdeckelement (9) zum Kuppeln am Basiselement (10) mittels des Fixierelements (11) ausgelegt ist.

3. System nach Anspruch 2, wobei das Basiselement (10) eine erste Oberfläche aufweist, die mindestens teilweise gekrümmt ist.

4. System nach Anspruch 2 oder 3, wobei das Abdeckelement (9) mindestens eine Ausstülpung umfasst und wobei das Kupplungselement (4) mindestens eine Ausnehmung (40) an einer Oberfläche aufweist, die gegenständig zu einer Oberfläche, die den ersten Abschnitt (P1) umfasst, angeordnet ist, sodass mindestens eine Ausstülpung des Abdeckelements (9) in die mindestens eine Ausnehmung des Kupplungselements (4) eingefügt wird, wenn das Abdeckelement (9) am Rahmen (2) positioniert ist.

5. System nach einem der Ansprüche 2 bis 4, wobei das Abdeckelement (9) am Rahmen (2) an der Vorderseite fixierbar ist.

6. Gelenkfahrzeug, umfassend mindestens einen ersten und einen zweiten Wagen, die miteinander mittels einer Gelenkkupplung an einer Verbindungszone zusammengefügt sind, und zudem umfassend:
- einen Schutzbalg (13), um die Verbindungszone zu schützen, aufweisend eine innenseitige Wand (13A) und eine Wand (13B), die der Außenseite des Fahrzeugs zugewandt ist;
- ein Schutzsystem (1) nach den vorhergehenden Ansprüchen, wobei der Rahmen (2) an einer internen Zone positioniert ist, die durch die Innenwand (13A) des Schutzbalgs (13) abgegrenzt ist.

7. Verfahren zum Schutz einer Verbindungszone, die zwei Wagen eines Gelenkfahrzeugs zusammenfügt, umfassend die folgenden Schritte:
- an der Verbindungszone, die zwei Wagen zusammenfügt, Vorbereiten eines Rahmens (2), der mit einem Aufnahmesitz (3) versehen ist, der sich entlang einer Längsrichtung (X) erstreckt;
- Vorbereiten eines Kupplungselements (4), umfassend einen ersten Abschnitt (P1), der ausgeformt ist, um mit dem Aufnahmesitz (3) gekuppelt zu werden, und einen zweiten Abschnitt (P2), in dem ein Gehäusesitz (5) ausgebildet ist;
- Vorbereiten eines Rohrelements (6);
- Einfügen des Rohrelements (6) in den Gehäusesitz (5), sodass das Rohrelement (6) mit dem Kupplungselement (4) gekuppelt wird;
- Vorbereiten eines Laminarelements (7), definierend einen Balg (8);
- Verbinden des Laminarelements (7) direkt oder indirekt mit dem Rohrelement (6);
- Kuppeln des Kupplungselements (4) mit dem Rahmen (2), wobei mindestens der erste Abschnitt (P1) des Kupplungselements (4) und/oder der erste Aufnahmesitz (3) mindestens teilweise verjüngt ist/sind, sodass der erste Abschnitt (P1) ausgelegt ist, um während des Kuppelns mit dem ersten Aufnahmesitz (3) automatisch zentriert zu werden, **dadurch gekennzeichnet, dass** der erste Abschnitt (P1) eine Kegelstumpfform aufweist und der erste Sitz (3) eine Rille aufweist, die passend zur Kegelstumpfform des ersten Abschnitts (P1) ausgeformt ist, wobei der erste Aufnahmesitz (3) eine Ausstülpung (30) aufweist, die sich wegführend vom Rahmen (2) erstreckt und der erste Abschnitt (P1) des Kupplungselements (4) einen Hohlraum umfasst, sodass die Ausstülpung des ersten Aufnahmesitzes (3) in den Hohlraum des ersten Abschnitts (P1) eingefügt wird;
- Vorbereiten einer Verriegelungsvorrichtung (9, 10, 11), die ausgelegt ist, um das Kupplungselement (4) über dem Rahmen (2) in Position zu halten, und
- Kuppeln der Verriegelungsvorrichtung (9, 10, 11) mit dem Rahmen (2).

8. Verfahren nach dem vorhergehenden Anspruch, wobei die Verriegelungsvorrichtung (9, 10, 11) ein Abdeckelement (9), ein Basiselement (10) und ein Fixierelement (11) umfasst und wobei der Schritt zum Kuppeln der Verriegelungsvorrichtung (9, 10, 11) mit dem Rahmen (2) die folgenden Schritte umfasst:
- Einfügen des Basiselements (10) in einen zweiten Sitz (12) zum Aufnehmen des Rahmens (2), und
- Kuppeln des Abdeckelements (9) mit dem mittels des Fixierelements (11) eingefügten Basiselement (10).

9. Verfahren nach Anspruch 8, wobei
- das Basiselement (10) eine zumindest teilweise gekrümmte Oberfläche aufweist, aufweisend ein erstes Ende und ein zweites Ende;
- der Schritt zum Einfügen des Basiselements (10) in einen zweiten Sitz (12) zum Aufnehmen des Rahmens (2) einen Schritt zum Positionieren des Basiselements (10) in eine Einfügeposition und zum Einfügen des ersten Endes des Basiselements (10) in den zweiten Sitz (12) und einen darauffolgenden Schritt zum Drehen des Basiselements (10) um mindestens eine Rotationsachse zum Einfügen des zweiten Endes des Basiselements (10) in den zweiten Aufnahmesitz (12) umfasst.

10. Verfahren nach einem der Ansprüche 7 bis 9, wobei der Schritt zum Kuppeln des Abdeckelements (9) mit dem mittels des Fixierelements (11) eingefügten Basiselement (10) das Fixieren des Abdeckelements (9) an der Vorderseite des Rahmens (2) umfasst.

## Revendications

1. Système de protection (1) pour un véhicule articulé pourvu d'une pluralité de voitures raccordées par un joint articulé, comprenant :
- un châssis (2) pourvu d'un premier siège de réception (3) s'étendant selon une direction longitudinale (X) ;
- un élément de couplage (4), comprenant une première portion (P1) formée pour se coupler au siège de réception (3) et une seconde portion (P2) dans laquelle un siège de logement (5) est fait ;
- un organe tubulaire (6) configuré pour être inséré dans la cavité de logement (5) de manière à être couplé à l'élément de couplage (4) ;
- un organe laminaire (7) définissant un soufflet (8) et stablement raccordé pendant l'utilisation, directement ou indirectement, à l'organe tubulaire (6) ;
- un dispositif de verrouillage (9, 10, 11) qui peut être couplé audit châssis (2) et configuré pour maintenir en position ledit élément de couplage (4) au niveau du châssis (2) ;
dans lequel au moins une entre la première portion (P1) de l'élément de couplage (4) et ledit premier siège de réception (3) est au moins partiellement conique de sorte que ladite première portion (P1) est configurée pour être automatiquement centrée pendant le couplage avec le premier siège de réception (3) et **caractérisé en ce que** la première portion (P1) a une forme tronconique et le premier siège (3) a une rainure formée pour correspondre à la forme tronconique de la première portion (P1),
dans lequel ledit premier siège de réception (3) comprend une protubérance (30) qui s'étend à distance du châssis (2) et ladite première portion (P1) de l'élément de couplage (4) comprend une cavité, de sorte que ladite protubérance du premier siège de réception (3) est insérée à l'intérieur de la cavité de la première portion (P1).

2. Système selon la revendication 1, dans lequel ledit dispositif de verrouillage (9, 10, 11) comprend un élément de recouvrement (9), un élément de base (10) et un élément de fixation (11), de sorte que ledit élément de base (10) est formé pour s'insérer à l'intérieur d'un second siège (12) pour recevoir le châssis (2) et ledit élément de recouvrement (9) est configuré pour se coupler, au moyen dudit élément de fixation (11), à l'élément de base (10).

3. Système selon la revendication 2, dans lequel ledit élément de base (10) a une première surface qui est au moins partiellement incurvée.

4. Système selon la revendication 2 ou 3, dans lequel ledit élément de recouvrement (9) comprend au moins une protubérance et dans lequel ledit élément de couplage (4) comprend au moins un évidement (40) au niveau d'une surface opposée à une surface comprenant la première portion (P1), de sorte que, lorsque l'élément de recouvrement (9) est positionné au niveau du châssis (2), ladite au moins une protubérance de l'élément de recouvrement (9) est insérée à l'intérieur dudit au moins un évidement de l'élément de couplage (4).

5. Système selon l'une quelconque des revendications 2 à 4, dans lequel ledit élément de recouvrement (9) peut être fixé au châssis (2) à l'avant.

6. Véhicule articulé, comprenant au moins une première et une seconde voiture jointes l'une à l'autre par un joint articulé en correspondance d'une zone de raccordement, et comprenant de plus :
- un soufflet de protection (13) pour protéger la zone de raccordement et ayant une paroi intérieure (13A) et une paroi (13B) faisant face à l'extérieur du véhicule ;
- un système de protection (1) selon les revendications précédentes, dans lequel ledit châssis (2) est positionné en correspondance d'une zone interne délimitée par la paroi interne (13A) du soufflet de protection (13) .

7. Procédé de protection d'une zone de raccordement joignant deux voitures d'un véhicule articulé, comprenant les étapes suivantes :
- préparer, au niveau de la zone de raccordement joignant deux voitures, un châssis (2) pourvu d'un siège de réception (3) s'étendant selon une direction longitudinale (X) ;
- préparer un élément de couplage (4), comprenant une première portion (P1) formée pour se coupler au siège de réception (3) et une seconde portion (P2) dans laquelle un siège de logement (5) est fait ;
- préparer un élément tubulaire (6),
- insérer ledit élément tubulaire (6) à l'intérieur du siège de logement (5), de manière à coupler ledit élément tubulaire (6) à l'élément de couplage (4),
- préparer un organe laminaire (7) définissant un soufflet (8) ;
- raccorder directement ou indirectement ledit organe laminaire (7) à l'organe tubulaire (6),
- coupler ledit élément de couplage (4) audit châssis (2), dans lequel au moins l'une entre la première portion (P1) de l'élément de couplage (4) et ledit premier siège de réception (3) est au moins partiellement conique de sorte que ladite première portion (P1) est configurée pour être automatiquement centrée pendant le couplage avec le premier siège de réception (3) **caractérisé en ce que** la première portion (P1) a une forme tronconique et le premier siège (3) a une rainure formée pour correspondre à la forme tronconique de la première portion (P1) et dans lequel ledit premier siège de réception (3) comprend une protubérance (30) qui s'étend à distance du châssis (2) et ladite première portion (P1) de l'élément de couplage (4) comprend une cavité, de sorte que ladite protubérance du premier siège de réception (3) est insérée à l'intérieur de la cavité de la première portion (P1),
- préparer un dispositif de verrouillage (9, 10, 11) configuré pour maintenir en position ledit élément de couplage (4) au-dessus du châssis (2), et
- coupler ledit dispositif de verrouillage (9, 10, 11) audit châssis (2).

8. Procédé selon la revendication précédente, dans lequel ledit dispositif de verrouillage (9, 10, 11) comprend un élément de recouvrement (9), un élément de base (10) et un élément de fixation (11) et dans lequel l'étape consistant à coupler ledit dispositif de verrouillage (9, 10, 11) audit châssis (2) comprend les étapes suivantes :
- insérer ledit élément de base (10) à l'intérieur d'un second siège (12) pour recevoir le châssis (2), et
- coupler l'élément de recouvrement (9) à l'élément de base (10) inséré au moyen dudit élément de fixation (11).

9. Procédé selon la revendication 8, dans lequel :
- ledit élément de base (10) a une surface au moins partiellement incurvée ayant une première extrémité et une seconde extrémité,
- l'étape consistant à insérer ledit élément de base (10) à l'intérieur d'un second siège (12) pour recevoir le châssis (2) comprend une étape consistant à positionner ledit élément de base (10) dans une position d'insertion et insérer la première extrémité de l'élément de base (10) à l'intérieur du second siège (12) et une étape ultérieure consistant à tourner, autour d'au moins un axe de rotation, ledit élément de base (10) pour insérer la seconde extrémité de l'élément de base (10) à l'intérieur du second siège de réception (12) .

10. Procédé selon l'une quelconque des revendications 7 à 9, dans lequel l'étape consistant à coupler ledit élément de recouvrement (9) à l'élément de base (10) inséré au moyen dudit élément de fixation (11) comprend la fixation dudit élément de recouvrement (9) à l'avant du châssis (2).
